# EUROPEAN PATENT APPLICATION

(11) **EP 4 354 837 A1**
(43) Date of publication of application: **17.04.2024**
(21) Application number: 22819663.0
(22) Date of filing: 11.06.2022
(51) Int. Cl.: H04M 1/04, G06F 1/16

(54) **MOBILE PHONE HOLDER CAPABLE OF BEING MOVED AND TWISTED**

(30) Priority: 11.06.2021 CN 202110650834
(71) Applicant: Guo, Changlai, Dezhou, Shandong 253000 (CN)
(72) Inventor: Guo, Changlai, Dezhou, Shandong 253000 (CN)
(74) Representative: Zaboliene, Reda
(86) International application number: PCT/CN2022/098291
(87) International publication number: WO 2022/258067

(57) **Abstract**

A bent and twisted mobile phone support, a bendable part of the mobile phone support being made according to the bendability of some articles, has three or more supporting legs, the spacing between the supporting legs of the support can be adjusted by bending the supporting legs; and has two or more support-stop hooks, extending or protruding forward from a planar structure. Because a deformation part twisted or rotated is distributed on a relatively long connecting arm or supporting leg or twisting rod and is not easy to break by repeated bending and twisting, the support-stop hooks do not need to be bent again after being extended by the twisting or rotating of the supporting legs or connecting arms.

## Description

### Technical Field

The present invention relates to a holder, primarily used for holding mobile phones, tablets, or small mirrors, and belongs to the field of storage and leisure.

### Background Technique

Currently, most mobile phone holders on the market are not practical. Some are not conducive to charging while placed on them, while others that support charging come with high costs and are not convenient for folding or storaging.

### Technical Problem

The applicant has previously invented a bendable mobile phone holder. However, the dragging hook part on the holder is difficult to bend directly by hand due to its small size, making it unsuitable for individuals with weak strength. Additionally, the dragging hook generally requires bending at two points to form, which complicates the process. If this part is pre-bent during manufacturing, the overall holder will not be in a flat plane, occupying more space and making it unsuitable for better storage. Moreover, the bending and folding action cannot be repeated multiple times, as it may easily break and has a short lifespan.

### Technical Solution

The technical solution employed in the present invention is to utilize the bendability of certain items (such as aluminum metal) and use the method of twisting or rotating the supporting legs to extend the deployed hooks that are already connected to the supporting legs. The hooks have more than two curved structures, and there is no need to bend the hooks again. The upper end of the supporting legs is twisted or rotated, and its structure is in a long strip shape. Under the condition of twisting or rotating by 70 to 90 degrees, since the deformation part is distributed within the long strip shape, the deformation per unit length is very small, so repeated bending and twisting is not easily prone to breakage. Specifically, for example, use a certain thickness of aluminum metal sheet as the bendable material for the mobile phone holder. The holder has three or more supporting legs. By utilizing the inherent bendability of the material used in the holder, the holder can be approximately folded into one plane by bending and twisting. The spacing of the supporting legs can also be adjusted by bending, allowing them to become upright and adjustable in tilt angle. The holder has two or more extending hooks, which can extend or protrude from the planar structure through twisting or rotating connected supporting legs or connecting arms without easily breaking. For the middle supporting leg of the holder, since it needs to be bent forward or backward at the top, a twisting rod can be connected or fixed at the top of the holder. When bending the middle supporting leg, the twisting rod will rotate along with it. Due to the distribution of the deformation part within the long strip shape, the deformation per unit length is very small, so repeated bending and twisting is not only effortless but also not easily prone to breakage, with a usage lifespan of more than 20 times or even more. Additionally, after twisting the twisting rod or supporting legs, their supporting strength is enhanced because, in the untwisted state, they cannot withstand a large force in their thin direction.

Due to the consideration of the twisting rod technology in this technical solution, the twisting and bending times and lifespan can be greatly increased, making it applicable in various fields. Therefore, this technology needs to be filed as an independent claim. The solution is as follows: "Application components" are connected or fixed on the "twisting rod", and the "application components" can be stored or unfolded, or exert their functions by twisting or bending the "twisting rod". Sometimes, the twisting rod itself also functions as a support. The deformation area of the "twisting rod" is distributed in a strip shape, so the deformation per unit length is very small, making it difficult to break or damage during repeated twisting. The "application components" can serve as support, obstruction, or hooks. The "twisting rod" can be fixed at one end or both ends, and a twisting rod with both ends fixed can better withstand forces perpendicular to the direction of the twisting rod, while a twisting rod with one end or single-end fixed can increase the twisting length.

The connecting arm or supporting rod is rotated about 70-90 degrees, and the hook will extend out from the bracket. After twisting or bending, there will be enough space on the upper part for placing items such as mobile phones, and it is also effortless to twist or bend. Simply twist or bend the hook with your hand, as the deformation area for twisting or rotation is distributed along the relatively longer connecting arm or supporting rod, resulting in minimal deformation per unit length. Therefore, repeated twisting and bending will not easily cause breakage, increasing the service life by more than 20 times. Additionally, this twisting and bending action requires less force and is convenient for storage. In its original state, it can be completely flat and easily packed in a mobile phone box, ready for direct delivery to consumers. Moreover, multiple of these foldable holders can be stored in a flat state. This invention does not rely on the shape of a serpentine tube for adjustment but directly utilizes the flexibility of certain metallic materials for bending and twisting. The standing part of the holder is made of three or more metal strips, which are bent and twisted to form a tripod shape to ensure stability, especially when the distance and angle between the three support legs are large. This invention effectively overcomes or bypasses the problem of metal fatigue and fracture, allowing for the widespread and practical application of metallic flexibility in daily life.

Furthermore, the dragging hook is spaced a certain distance from the bottom of the supporting leg, facilitating the insertion of charger cables into the mobile phone.

Furthermore, the dragging hook has two or more bending structures or pre-formed hook-shaped structures, which can extend without the need for further folding or bending after being rotated or twisted through the supporting leg or connecting arm.

### Advantageous Effects

The advantageous effects of the present invention are as follows: the holder can be made entirely or mostly of metal, which gives it a more high-end feel compared to plastic, and it has a longer lifespan than plastic. The holder also features an aesthetically pleasing appearance, is easy to store or unfold, and is convenient to use. The folding and unfolding lifespan is significantly longer, and metal has less environmental impact and is recyclable. Inexpensive metals such as iron, aluminum, or stainless steel can be used to make the mobile phone holder at a very low cost, and the charging of the phone is not affected when it is placed on the holder.

An unexpected effect of the present invention is that repeated folding and twisting does not easily lead to breakage, extending the lifespan by more than 20 times. The end of the dragging hook does not need to be bent again, and this folding and twisting also facilitates storage. The holder can be completely flattened in its factory state, making it easy to place in a mobile phone packaging box and directly provide to consumers.

Additionally, the holder can be printed with trademarks, manufacturer labels, or other texts or graphics. It can also hold items such as nameplates (for meetings), ID cards, books, sheet music, MP4 players, brochures, mini flashlights, photo frames, etc. Larger-sized holders can even accommodate laptops, small cutting boards in the kitchen, and other items.

### Illustration

Figure 1 is a three-dimensional diagram illustrating the storage state of the mobile phone holder as designed in the present invention. It is a schematic diagram roughly drawn in one plane.
Figure 2 is a three-dimensional diagram illustrating the usage state of the mobile phone holder as designed in the present invention. It is a schematic diagram showing the twisting and turning operation to reach the upright position.
Figure 3 is a three-dimensional diagram illustrating the storage state of the mobile phone holder as designed in the present invention design 2. It is a schematic diagram roughly drawn in one plane.
Figure 4 is a three-dimensional diagram illustrating the usage state of the mobile phone holder as designed in the present invention design 2. It is a schematic diagram showing the twisting and turning operation to reach the upright position.

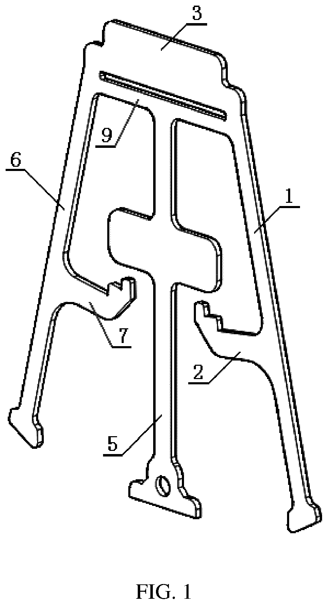

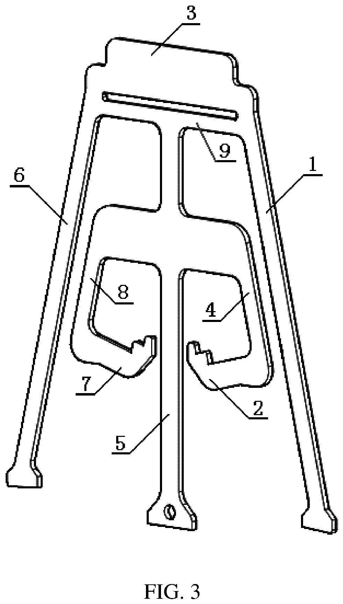

Explanation of figure labels: In figure 3, 1 represents the right supporting leg, 2 represents the right dragging hook, 3 represents the backrest and marking block, 4 represents the right connecting arm, 5 represents the middle supporting leg, 6 represents the left supporting leg, 7 represents the left dragging hook, 8 represents the left connecting arm, and 9 represents the twisting rod.

The figure labels in figure 1 are the same as figure 3.

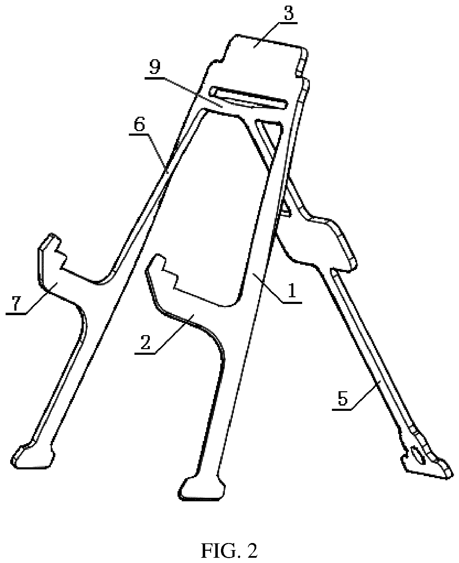

The figure labels in figure 2 are the same as figure 3.

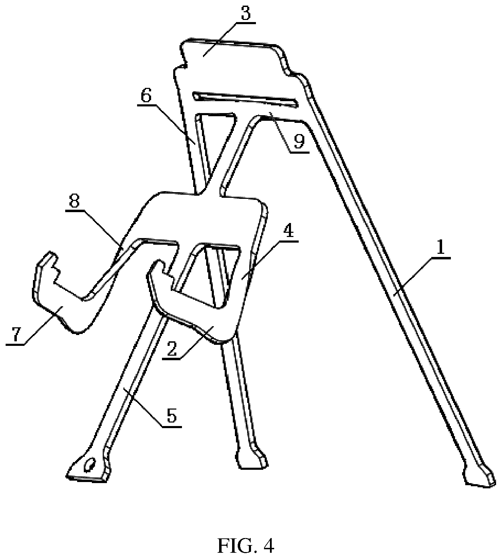

The figure labels in figure 4 are the same as figure 3.

### Best Embodiment of the Invention

Figures 1 and 2 in the drawings represent the best configuration of the present invention. The mobile phone holder is made of aluminum sheet, preferably pure aluminum, which is resistant to breaking when twisted or bent. The aluminum sheet is cut by laser or stamped by a mold, with a thickness of approximately 1.2-2mm. The product can also be made by die casting for large-scale and fast production. By twisting and turning the metal object shown in Figure 1 by hand, it can be transformed into the shape shown in Figure 2 with just two steps of twisting and turning, allowing for immediate use.

### The Embodiment of the Invention

The following description is provided in conjunction with the drawings and examples to further illustrate the present invention._{∘}

Figure 1 is a three-dimensional diagram of the storage state of a design of the present invention. In a general plane, the right supporting leg 1 and the left supporting leg 6 are twisted in the same direction, while the middle supporting leg 5 is twisted in the opposite direction, thereby transforming it into an upright tripod state. As the middle supporting leg 5 is connected to the middle of the twisting rod 9, the twisting of the legs will drive the rotation of the twisting rod 9. The deformation of the twisting rod 9 is distributed in a strip shape, and the deformation per unit length is minimal, making it difficult to break when repeatedly twisted. The right actuating hook 2 in Figure 1 is held by hand and twisted, causing the connected right supporting leg 1 to rotate approximately 70-90 degrees. The other left actuating hook 7 is also twisted in the same direction, causing the connected left supporting leg 6 to rotate about 70-90 degrees. At this point, the appearance should be roughly the same as the three-dimensional diagram in Figure 2. Place the mobile phone on the right actuating hook 2 and the left actuating hook 7, and let the phone lean against the backrest 3 and the marking block. This allows for normal viewing and use of the mobile phone. The charging cable can be inserted into the bottom of the phone, allowing for simultaneous charging and phone usage. The tilt angle of the holder can be adjusted by further twisting or nudging the three supporting legs, in order to better meet viewing requirements. The backrest 3 and the marking block not only serve as the backrest and connect the three supporting legs, but can also be imprinted with various marks or trademarks, meeting the expression needs of the manufacturer. The deformation per unit length is minimal when the right supporting leg 1 and the left supporting leg 6 are twisted, making it difficult to break when repeatedly twisted.

Figure 3 is a three-dimensional diagram illustrating the storage state of the mobile phone holder according to the second embodiment of the present invention. The right supporting leg 1 and the left supporting leg 6 are flexed or twisted in the same direction, while the middle supporting leg 5 is flexed in the opposite direction, thus transforming the holder into a tripod-like upright state. The middle supporting leg 5 is connected to the middle part of the twisting rod 9. During the flexing process, the twisting of the middle supporting leg 5 causes the twisting rod 9 to rotate. The deformed portion of the twisting rod 9 is distributed throughout its elongated shape. The deformation per unit length is minimal, making it less prone to breakage during repeated flexing and twisting. The right sliding hook 2 shown in Figure 3 is held by hand and twisted, causing the right connecting arm 4, which is connected to it, to rotate approximately 70 to 90 degrees. The left sliding hook 7 also twists in the same direction, causing the left connecting arm 8, which is connected to it, to rotate approximately 70 to 90 degrees. At this point, the appearance should be similar to the three-dimensional diagram shown in Figure 4. Place the mobile phone on the right sliding hook 2 and the left sliding hook 7, with the phone leaning diagonally against the backrest 3 and the marking block. This allows for normal viewing and use of the phone. Other aspects of the design are the same as the one shown in Figure 2, including the ability to adjust the tilt angle and apply markings or trademarks on top. During the twisting process of the right connecting arm 4 and the left connecting arm 8, the deformation per unit length is minimal, making them less prone to breakage during repeated flexing and twisting.

### Industrial Utility

The mobile phone holder is merely a structural component with a simple design, making it suitable for large-scale industrial production.

The embodiments described above are the preferred embodiments of the present invention. However, the scope of protection of the present invention is not limited thereto. Those skilled in the art would recognize that within the technical scope disclosed by the present invention, equivalent substitutions or modifications based on the technical solution and inventive concept of the present invention are also covered within the scope of protection of the present invention.

## Claims

1. A mobile phone holder with a bending and twisting mechanism, comprising three or more supporting legs. The feature of this holder lies in the foldability of the material used in the holder itself, enabling the holder to be collapsed into approximately one plane through twisting and bending. The supporting legs of the holder can also be adjusted in distance through bending, allowing the holder to stand upright and adjust the tilt angle. The holder is equipped with two or more retractable hooks (2) and (7), which can be extended or protruded from the flat structure through the twisting or rotation of the connected supporting legs (1) and (6) or connecting arms (4) and (8). The deformation area caused by twisting or rotation is mainly distributed on the relatively longer connecting arms or supporting legs, with minimal deformation per unit length, ensuring durability and resistance to repeated bending and twisting.

2. A method or design used in Claim 1, which can be widely applied in various fields and increases the number of metal's repeated bending actions. The feature of this method or design lies in utilizing the bending or twisting properties of the metal material itself. The "application component" is connected or fixed onto the "twisting rod", and by twisting or bending the "twisting rod", the " application component" can be collapsed or expanded, or activated. The deformable part of the "twisting rod" is distributed in a strip shape, with minimal deformation per unit length, ensuring durability and resistance to repeated bending and twisting.

3. A mobile phone holder, as described in Claim 1, **characterized in that** the turning and twisting mechanism of the clamping hook (2) and (7) consists of two or more bent structures or pre-formed hook-shaped structures, which, after being extended through the twisting or rotating of the supporting legs (1) and (6) or the connecting arms (4) and (8), do not require additional folding or bending.

4. A method or design used in conjunction with the mobile phone holder described in Claim 2, which can be widely applied in other fields to increase the number of repeated metal folds, **characterized in that** the ends of the "twist rod" are fixed.
